# EUROPEAN PATENT APPLICATION

(11) **EP 3 170 853 A1**
(43) Date of publication of application: **24.05.2017**
(21) Application number: 15821506.1
(22) Date of filing: 29.06.2015
(51) Int. Cl.: C08G 69/34

(54) **HIGHLY FLOWABLE POLYAMIDE RESIN**

(30) Priority: 15.07.2014 JP 2014145093
(71) Applicant: Sumitomo Electric Industries, Ltd., Osaka-shi, Osaka 541-0041 (JP); Sumitomo Electric Fine Polymer, Inc., Sennan-gun, Osaka 590-0458 (JP)
(72) Inventor: FUKUMOTO, Ryota, Osaka-shi Osaka 554-0024 (JP); YAMASAKI, Satoshi, Osaka-shi Osaka 554-0024 (JP); NISHIKAWA, Shinya, Osaka-shi Osaka 554-0024 (JP); YABE, Yuuki, Sennan-gun Osaka 590-0458 (JP); FUJITA, Ryohei, Sennan-gun Osaka 590-0458 (JP); MATSUOKA, Sachiko, KATO-SHI Hyogo 673-1425 (JP); FUJIWARA, Yasuhiro, KATO-SHI Hyogo 673-1425 (JP)
(74) Representative: Boult Wade Tennant
(86) International application number: PCT/JP2015/068702
(87) International publication number: WO 2016/009821

(57) **Abstract**

A resin has a viscosity of 10 Pa·s or less at a shear rate of 1 s⁻¹ at 150°C and a viscosity of 100 Pa·s or more at a shear rate of 1 s⁻¹ at 125°C, the resin having a low viscosity that allows easy penetration into strands of a wire harness at a heat shrinkage temperature and having a high viscosity that does not allow flowing of the resin at a temperature at which the wire harness is used. In particular, a highly flowable polyamide resin includes an acid component (a) containing, as a main component, a polymerized fatty acid which contains a dimer acid having 16 to 48 carbon atoms and in which the content of the dimer acid is 30% by mass or more, an acid component (b) containing, as a main component, a dibasic acid selected from the group consisting of dicarboxylic acids having 6 to 22 carbon atoms and ester derivatives thereof, and an amine component (c) containing a diamine as a main component, the acid component (a), the acid component (b), and the amine component (c) being linked by amide bonds, in which the mass ratio of the acid component (a) to the acid component (b) is in a predetermined range.

## Description

### Technical Field

The present invention relates to a highly flowable polyamide resin which has a high viscosity at room temperature, thus exhibiting excellent shape retention and which has a decreasing viscosity with increasing temperature, thus exhibiting excellent flowability.

### Background Art

A wire harness for automobile and motorcycle use is produced by binding together a plurality of insulated electrical wires, each being formed by covering a bundle of strands (usually a plurality of strands) made of a conductor such as a copper alloy with an insulator. Strands are exposed at a connecting portion (joint) located at the end or middle of an electrical wire bundle, such as a wire harness. In order to waterproof such a portion (connecting portion), a method is used in which a heat-shrinkable tube or heat-shrinkable cap having a layer made of a hot-melt adhesive (inner-layer adhesive) formed on the inner surface thereof is placed over the connecting portion, followed by heat shrinking to achieve waterproofing.

In waterproofing a wire harness, it is required to prevent entry of water from the outside into a connecting portion, and it is also required to block entry of water into the interstices between strands (perform water blocking between strands) so that water that has entered from a portion that has not been subjected to waterproof treatment can be prevented from flowing inside the insulated electrical wires in many cases. However, since the inner-layer adhesive used in the existing method has a high viscosity, a process of simply placing and shrinking the heat-shrinkable tube or cap does not cause the inner-layer adhesive to penetrate the small interstices between strands, and it is not possible to achieve sufficient water blocking ability between strands.

Accordingly, in order to achieve sufficient water blocking ability between strands, techniques in which, before shrinking a heat-shrinkable tube or cap, an operation is performed, such as immersing a connecting portion in a low-viscosity adhesive, or impregnating the interstices between strands in a connecting portion with a thermosetting resin such as an epoxy resin, followed by curing, are proposed in PTL 1, PTL 2, etc. However, in these techniques, at least two operations are required: an operation for performing water blocking between strands and an operation of placing and shrinking a heat-shrinkable tube or cap. This gives rise to a productivity problem. Accordingly, it has been desired to develop a heat-shrinkable tube or cap in which waterproofing and sufficient water blocking between strands can be achieved merely by an operation of placing and shrinking a heat-shrinkable tube or cap.

### Citation List

### Patent Literature

PTL 1: Japanese Unexamined Patent Application Publication No. 11-233175
PTL 2: Japanese Unexamined Patent Application Publication No. 2009-99385

### Summary of Invention

### Technical Problem

As a method for achieving sufficient water blocking ability between strands merely by an operation of placing and shrinking a heat-shrinkable tube or cap, it is conceivable to use, as an inner-layer adhesive, a resin which has a low viscosity at a heat shrinkage temperature and which can penetrate the interstices between strands. However, in existing methods, the resin having a low viscosity at the heat shrinkage temperature may have a low viscosity at a temperature lower than the heat shrinkage temperature, at which a wire harness is used, and there is a possibility that problems may result; for example, the tube or cap is not fixed, and the adhesive flows out to the outside. Furthermore, even if the resin penetrates the interstices between strands, the resin easily flows, and therefore, it is unlikely to have sufficient water blocking ability between strands. Other problems are also likely to occur; for example, it is not possible to retain the shape of the inner layer during storage of the heat-shrinkable tube or cap.

Accordingly, it has been desired to develop, as an inner-layer adhesive of a heat-shrinkable tube or cap, a resin which has a low viscosity that allows penetration into strands at a temperature during heat shrinkage, which has a sufficiently high viscosity when the temperature is decreased, and which has a viscosity that does not allow flowing of the resin (or which is solidified) at a temperature at which a wire harness is used such that it is possible to achieve sufficient water blocking ability between strands. Furthermore, since wire harnesses for automobile use are often subjected to vibration, the resin is desired to have flexibility (toughness) such that cracks are not caused by vibration, deformation, or the like.

It is an object of the present invention to provide a resin which has a low viscosity that allows easy penetration into strands of a wire harness at a temperature during heat shrinkage (heat shrinkage temperature) and which has a high viscosity that does not allow flowing of the resin at a temperature at which the wire harness is used (i.e., a resin whose viscosity changes greatly with temperature). It is another object of the present invention to provide the resin described above which also has excellent flexibility (toughness). Solution to Problem

A first embodiment of the present invention relates to a highly flowable polyamide resin which has a viscosity of 10 Pa·s or less at a shear rate of 1 s⁻¹ at 150°C and a viscosity of 100 Pa·s or more at a shear rate of 1 s⁻¹ at 125°C.

A second embodiment of the present invention relates to a highly flowable polyamide resin which is a copolyamide resin including an acid component (a) containing, as a main component, a polymerized fatty acid which contains a dimerized fatty acid (dimer acid) having 16 to 48 carbon atoms and in which the content of the dimerized fatty acid is 30% by mass or more, an acid component (b) containing, as a main component, a dibasic acid selected from the group consisting of aliphatic dicarboxylic acids having 6 to 22 carbon atoms, aromatic dicarboxylic acids having 8 to 22 carbon atoms, and ester derivatives of the dicarboxylic acids, and an amine component (c) containing a diamine as a main component, the acid component (a), the acid component (b), and the amine component (c) being linked by amide bonds, in which the mass ratio of the acid component (a) to the acid component (b) is in a range of 98/2 to 50/50; and which has a viscosity of 10 Pa·s or less at a shear rate of 1 s⁻¹ at 150°C.

### Advantageous Effects of Invention

According to the first embodiment of the present invention, it is possible to provide a resin which has a low viscosity that allows easy penetration into strands of a wire harness at a temperature during heat shrinkage (heat shrinkage temperature) and which has a high viscosity that does not allow flowing of the resin at a temperature at which the wire harness is used (i.e., a resin whose viscosity changes greatly with temperature).

According to the second embodiment of the present invention, it is possible to provide a highly flowable polyamide resin which has a viscosity of 10 Pa·s or less at a shear rate of 1 s⁻¹ at the heat shrinkage temperature and a viscosity of 100 Pa·s or more at a shear rate of 1 s⁻¹ at 125°C, and which has excellent flexibility (toughness) when solidified by cooling.

### Description of Embodiments

With respect to the first and second embodiments, embodiments will be described below on the basis of specific examples and the like. However, it is to be understood that the first and second embodiments of the invention are not limited to the embodiments and examples described below, but include all modifications within the meaning and scope equivalent to those of the claims.

The present inventors have performed thorough studies in order to develop a resin which has a low viscosity that allows easy penetration into strands of a wire harness at a temperature during heat shrinkage (heat shrinkage temperature) and which has a high viscosity that does not allow flowing of the resin at a temperature at which the wire harness is used, and as a result, have found that the problem can be solved by a polyamide resin which has a viscosity of 10 Pa·s or less at a shear rate of 1 s⁻¹ at 150°C and a viscosity of 100 Pa·s or more at a shear rate of 1 s⁻¹ at 125°C, thus completing the present invention.

### (1) First embodiment

The first embodiment of the present invention relates to a highly flowable polyamide resin which has a viscosity of 10 Pa·s or less at a shear rate of 1 s⁻¹ at 150°C and a viscosity of 100 Pa·s or more at a shear rate of 1 s⁻¹ at 125°C.

The highly flowable polyamide resin according to the first embodiment has a viscosity of 10 Pa·s or less at a shear rate of 1 s⁻¹ at 150°C. The heat shrinkage temperature of a heat-shrinkable tube or cap for which the highly flowable polyamide resin is used as an inner-layer adhesive (temperature at which the heat-shrinkable tube or cap is heated to cause heat shrinkage) varies depending on the type of resin constituting the tube or cap and the like. In the case where the resin constituting the tube or cap is a polyolefin resin or fluororesin, the heat shrinkage temperature is usually selected from a range of 150°C to 250°C. Accordingly, when an exposed portion of electrical wires of a wire harness is waterproofed using a heat-shrinkable tube or cap including, as an inner-layer adhesive, a highly flowable polyamide resin having a viscosity of 10 Pa·s or less at a shear rate of 1 s⁻¹ at 150°C, since the highly flowable polyamide resin has a low viscosity of 10 Pa·s or less during heat shrinkage, the resin can easily penetrate the interstices between strands to perform water blocking between strands.

In the highly flowable polyamide resin according to the first embodiment, the viscosity at a shear rate of 1 s⁻¹ at 150°C is preferably 2 Pa·s or less, and more preferably 1 Pa·s or less. When an exposed portion of electrical wires of a wire harness is waterproofed using a heat-shrinkable tube or cap including, as an inner-layer adhesive, such a highly flowable polyamide resin, penetration into the interstices between strands during heat shrinkage is further facilitated.

The highly flowable polyamide resin according to the first embodiment has a viscosity of 100 Pa·s or more at a shear rate of 1 s⁻¹ at 125°C.

As a result of studies, the present inventors have found that when the viscosity of the highly flowable polyamide resin at 125°C is set to be in the range described above, the highly flowable polyamide resin is sufficiently solidified at any temperature at which wire harnesses for automobile use are usually used, and thus that when an exposed portion of electrical wires of a wire harness is waterproofed using a heat-shrinkable tube or cap including an inner adhesive layer composed of the highly flowable polyamide resin, it is possible to have sufficiently excellent water blocking ability between strands during use of the wire harness. Furthermore, it has been found that when the highly flowable polyamide resin according to the first embodiment is used as the inner-layer adhesive, it is possible to prevent the adhesive from flowing out of the tube or cap at 125°C or lower. Furthermore, it has also been found that it is possible to suppress deformation of the inner-layer adhesive (highly flowable polyamide resin) during storage of the heat-shrinkable tube or cap.

Furthermore, in the highly flowable polyamide resin according to the first embodiment, the viscosity at a shear rate of 1 s⁻¹ at 125°C is preferably 200 Pa·s or more. When an exposed portion of electrical wires of a wire harness is waterproofed using a heat-shrinkable tube or cap including an inner adhesive layer composed of such a highly flowable polyamide resin, it is possible to have more excellent water blocking ability between strands.

The viscosity (shear viscosity) at a shear rate of 1 s⁻¹ is the value measured using a rotary rheometer. Specifically, the viscosity is the value measured using a rotary rheometer ("MCR302" manufactured by Anton Paar Company) with a PP-12 jig.

The highly flowable polyamide resin according to the first embodiment preferably has a softening point of 63°C or higher, the softening point being determined by thermomechanical analysis (TMA) under the following conditions:
Measuring device: TMA-50 (manufactured by SHIMAZU Corporation)
Atmosphere: nitrogen
Measurement temperature: raised from 25°C to 150°C at 5°C/min
Load: 10 g, indented with a 0.5-mmφ jig

### (2) Second embodiment

The second embodiment of the present invention relates to a highly flowable polyamide resin which is a copolyamide resin including an acid component (a) containing, as a main component, a polymerized fatty acid which contains a dimerized fatty acid (dimer acid) having 16 to 48 carbon atoms and in which the content of the dimerized fatty acid is 30% by mass or more, an acid component (b) containing, as a main component, a dibasic acid selected from the group consisting of aliphatic dicarboxylic acids having 6 to 22 carbon atoms, aromatic dicarboxylic acids having 8 to 22 carbon atoms, and ester derivatives of the dicarboxylic acids, and an amine component (c) containing a diamine as a main component, the acid component (a), the acid component (b), and the amine component (c) being linked by amide bonds, in which the mass ratio of the acid component (a) to the acid component (b) is in a range of 98/2 to 50/50; and which has a viscosity of 10 Pa·s or less at a shear rate of 1 s⁻¹ at 150°C.

The acid component (a) constituting the highly flowable polyamide resin according to the second embodiment contains, as a main component, a polymerized fatty acid which contains a dimerized fatty acid (dimer acid). A polymerized fatty acid is a polybasic mixed fatty acid obtained by polymerizing monobasic unsaturated fatty acids. Examples of monobasic unsaturated fatty acids include monobasic fatty acids having one or more double bonds or triple bonds and 8 to 24 carbon atoms, which may be monobasic fatty acids obtained from natural fats and oils or synthetic monobasic fatty acids. Note that the expression "contains as a main component" means that the acid component contains at least 50% by mass or more, preferably 80% to 100% by mass, of a polymerized fatty acid and may contain other components within a range that does not depart from the spirit and scope of the invention.

Specific examples of monobasic fatty acids obtained from natural fats and oils include natural animal and vegetable oil fatty acids, such as soybean oil fatty acids, tall oil fatty acids, rapeseed oil fatty acids, and rice bran oil fatty acids; and refined oils obtained by refining these oils, such as oleic acid, linoleic acid, and linolenic acid.

The polymerized fatty acid contains, in addition to the dimerized fatty acid, a fatty acid (as a starting material) and trimerized or more highly oligomerized fatty acids. The polymerized fatty acid which is a main component of the acid component (a) is characterized by containing 30% by mass or more of the dimerized fatty acid. Preferably, the polymerized fatty acid contains 40% by mass or more of the dimerized fatty acid.

As the polymerized fatty acid which is a main component of the acid component (a), it is also possible to use a commercially available polymerized fatty acid containing 30% by mass or more of a dimerized fatty acid. A commercially available polymerized fatty acid usually contains, as a main component, a dimerized fatty acid. It may also be possible to increase the content of the dimerized fatty acid by distilling the commercially available polymerized fatty acid when used. Depending on circumstances, the degree of unsaturation may be decreased by hydrogenation when used. As a commercially available product, in particular, Tsunodyme 216 (manufactured by Tsuno Food Industrial Co., Ltd.) or the like is preferable. A mixture of a plurality of polymerized fatty acids may also be used. Furthermore, an esterified derivative of the polymerized fatty acid may also be used. When a commercially available product is used, in order to adjust the content of a dimerized fatty acid, a fatty acid (as a starting material) and/or a fatty acid obtained as a by-product together with a polymerized fatty acid may be mixed for use.

The content of the dimerized fatty acid (dimer acid) can be obtained by measurement by gas chromatography, gel permeation chromatography, high-performance liquid chromatography, or the like. However, the numerical values may vary depending on the measurement method. Accordingly, the content of the dimerized fatty acid (dimer acid) described in this description and claims is defined as the value obtained by a measurement method in accordance with AOCS Tf5-91, using high-performance liquid chromatography.

The acid component (b) contains, as a main component, one or two or more dibasic acids selected from the group consisting of aliphatic dicarboxylic acids having 6 to 22 carbon atoms, aromatic dicarboxylic acids having 8 to 22 carbon atoms, ester derivatives of the aliphatic dicarboxylic acids, and ester derivatives of the aromatic dicarboxylic acids. The expression "contains as a main component" has the same meaning as that described above.

Specific examples of the dibasic acid include adipic acid, pimelic acid, suberic acid, azelaic acid, sebacic acid, dodecanedioic acid, hexadecanedioic acid, eicosandioic acid, diglycolic acid, 2,2,4-trimethyl adipic acid, xylenedicarboxylic acid, 1,4-cyclohexanedicarboxylic acid, terephthalic acid, isophthalic acid, and ester derivatives of these acids, and any one or a mixture of two or more selected from these can be used. In particular, any one or a mixture of two or more selected from adipic acid, azelaic acid, sebacic acid, and dodecanedioic acid is preferable.

The amine component (c) contains a diamine as a main component. The expression "contains as a main component" has the same meaning as that described above.

The diamine which is a main component of the amine component (c) is preferably selected from the group consisting of aliphatic diamines having 6 to 44 carbon atoms and alicyclic diamines. More specifically, examples thereof include aliphatic diamines, such as ethylene diamine, 1,4-diaminobutane, hexamethylene diamine, nonamethylene diamine, undecamethylene diamine, dodecamethylene diamine, methylpentamethylene diamine, 2,2,4-trimethylhexamethylene diamine, 2,4,4-trimethylhexamethylene diamine, and dimer diamines derived from polymerized fatty acids having 20 to 48 carbon atoms; and alicyclic diamines, such as bis-(4,4'-aminocyclohexyl)methane, metaxylene diamine, paraxylene diamine, isophorone diamine, norbornane diamine, and piperazine. Any one selected from these may be used alone, or a mixture of two or more of these may be used. In particular, it is preferable to use an alicyclic diamine as an essential component.

The highly flowable polyamide resin according to the second embodiment of the present invention is a copolymer of the acid component (a), the acid component (b), and the amine component (c). The mass ratio of the acid component (a) and the acid component (b), which are used in the copolymerization, is in a range of 98/2 to 50/50. Preferably, the mass ratio of the acid component (a) and the acid component (b) is in a range of 95/5 to 70/30. When the mass ratio of the acid component (a) to the acid component (b) is greater than 98/2, the cohesiveness (crystallizability) of the resulting copolyamide resin decreases, and in the case where the resin is used as an inner-layer adhesive of a heat-shrinkable tube or heat-shrinkable cap for waterproofing a wire harness, the resin flows at a temperature at which the wire harness is used, which is not desirable. When the mass ratio of the acid component (b) to the acid component (a) is greater than 50/50, the resulting copolyamide resin becomes hard and brittle, and therefore it is not possible to obtain a resin having intended excellent flexibility (toughness), which is not desirable.

The highly flowable polyamide resin according to the second embodiment obtained as described above is a highly flowable polyamide resin which has a viscosity of 10 Pa·s s or less at a shear rate of 1 s⁻¹ at the heat shrinkage temperature of a heat-shrinkable tube or cap and a viscosity of 100 Pa·s or more at a shear rate of 1 s⁻¹ at 125°C, and which has excellent flexibility (toughness) when solidified by cooling. Therefore, the highly flowable polyamide resin can be suitably used as an inner-layer adhesive of a heat-shrinkable tube or heat-shrinkable cap for waterproofing an exposed portion of electrical wires of a wire harness for automobile use and the like.

That is, the highly flowable polyamide resin has a low viscosity that allows penetration into strands at a temperature during heat shrinkage, has a sufficiently high viscosity when the temperature is decreased, and has a viscosity that does not allow flowing of the resin or is solidified at a temperature at which a wire harness is used such that it is possible to achieve sufficient water blocking ability between strands, and the highly flowable polyamide resin also has flexibility (toughness) such that cracks are not caused by vibration, deformation, or the like.

Accordingly, merely by placing a heat-shrinkable tube or heat-shrinkable cap including an inner adhesive layer composed of the highly flowable polyamide resin over a portion to be waterproofed of a wire harness, followed by heat shrinking, not only waterproofing but also excellent water blocking ability between strands can be obtained. Furthermore, since the heat-shrinkable tube or heat-shrinkable cap also has excellent flexibility (toughness), it is possible to suppress cracks caused by vibration, deformation, or the like when the wire harness is used.

The heat-shrinkable tube refers to a tube that has a property of being shrunk in the radial direction by heating. The heat-shrinkable cap refers to a heat-shrinkable tube whose one end has been closed by heat shrinking or the like. For example, a resin tube having heat shrinkability (heat-shrinkable tube) can be produced by a method in which a linear polyolefin polymer is formed into a tubular shape with a melt extruder or the like, the resin is crosslinked by irradiation with ionizing radiation or the like, and then the diameter of the tube is expanded, for example, by a process of introducing compressed air into the tube, followed by cooling to fix the shape. A heat-shrinkable cap can be produced by closing one end of the heat-shrinkable tube produced as described above by heat shrinking or the like.

A heat-shrinkable tube or heat-shrinkable cap in which the highly flowable polyamide resin according to the second embodiment is used as an inner-layer adhesive can be produced by applying the highly flowable polyamide resin to the inner surface of a known heat-shrinkable tube or heat-shrinkable cap by a known method for forming an inner adhesive layer.

### Example and Comparative Examples 1 to 5

### [Synthesis of polyamide resin]

Polyamide resins are each synthesized by copolycondensation (polyamidation reaction) of the components shown in Table 1. The polyamidation reaction is conducted by charging the components shown in Table 1 at a predetermined ratio into a reaction vessel equipped with a stirrer, then raising the temperature, and maintaining the mixture in a reaction temperature range of 180°C to 270°C for one hour or more while removing water generated by the polycondensation reaction out of the system to allow polymerization to proceed. In order to allow the reaction to further proceed, preferably, the reaction is conducted under reduced pressure, in particular, at 10 kPa or less. When the reaction temperature is lower than 180°C, the reaction rate decreases and the resin viscosity in the system increases, which makes it difficult to conduct an efficient polycondensation reaction. On the other hand, when the reaction temperature exceeds 270°C, decomposition and a coloring reaction are likely to occur, which is not desirable.

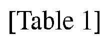

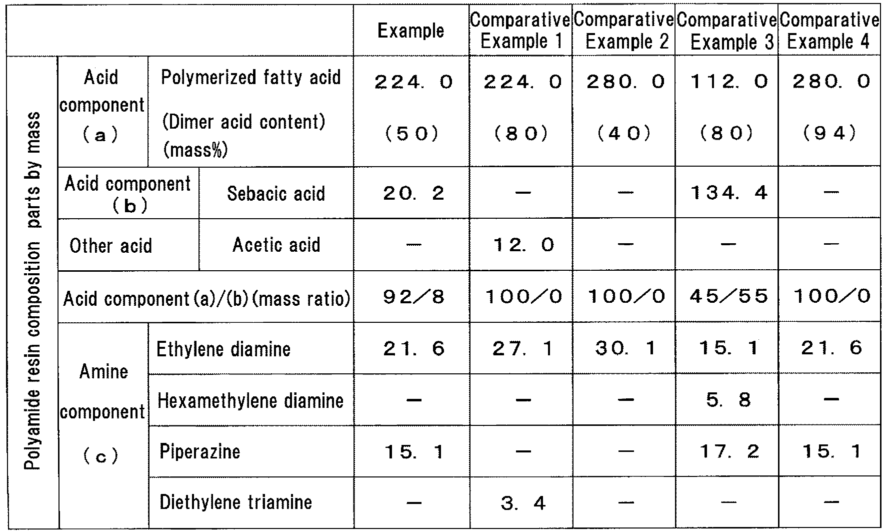

Regarding each of the resulting polyamide resins, shear viscosity, water blocking ability between strands, flexibility, a sagging test, and the softening point by TMA were measured by the measurement methods described below. The results thereof are shown in Table 2.

### (Comparative Example 5)

Regarding Evaflex EV205W (ethylene-vinyl acetate copolymer (EVA): manufactured by Du Pont-Mitsui Polychemicals Co., Ltd.), instead of a polyamide resin, shear viscosity, water blocking ability between strands, flexibility, a sagging test, and the softening point by TMA were also measured by the measurement methods described below. The results thereof are shown in Table 2.

### (Measurement of shear viscosity)

The shear viscosity (measured value of viscosity at a predetermined shear rate) was measured using a rotary rheometer ("MCR302" manufactured by Anton Paar Company) with a PP-12 jig while changing the shear rate from 0.001 to 1,000 s⁻¹ at the temperatures shown in Table 2. Note that the shear rate is determined by the shape of a rotator and the rotational speed, and the rotary rheometer is configured to automatically set the shear rate. The results at a shear rate of 1 s⁻¹ are shown under the column of Viscosity in Table 2.

### (Water blocking ability between strands)

Each of the resulting polyamide resins was heated at 150°C for 10 minutes, a 0.75 sq (16 conductors) electrical wire was immersed therein, and then heating was performed at 150°C for 5 minutes in a thermostatic oven. After cooling, one end of the electrical wire was immersed in water, and compressed air of 0.2 MPa was injected from the other end of the electrical wire. In such a manner, an air leakage test (observation of presence or absence of air leakage) was performed. The case where no air leakage occurred was evaluated to be "Good", and the case where air leakage was observed was evaluated to be "Poor". The measurement results are shown under the column of Testing for water blocking between strands in Table 2.

### (Sagging test) Occurrence or Nonoccurrence of sagging at 125°C

Each polyamide resin was formed into a sheet with a thickness of 1 mm and the sheet was cut into a size of 5 mm × 40 mm. The cut sample was surrounded from all sides by four glass plates. After the sample was vertically held in air inside a thermostatic oven at 125°C and left to stand for 24 hours, it was confirmed whether or not the polyamide resin sagged from the glass plates. The occurrence or nonoccurrence of sagging (measurement result) is shown under the column of Sagging test in Table 2.

### (Flexibility)

Each polyamide resin was formed into a sheet with a thickness of 1 mm and the sheet was punched out so as to have a width of 10 mm. When the sheet was wound by one turn around a mandrel with a diameter of 20 mm, it was observed whether or not cracks occurred in the sheet. The case where crazes and breaks were not observed was evaluated to be "Good", and the case where crazes and breaks were observed was evaluated to be "Poor". The measurement results are shown under the column of Flexibility in Table 2.

### (Softening point measurement by TMA)

The softening point was determined by TMA measurement under the conditions described below. The results thereof are shown under the column of Softening point in Table 2.
Device: TMA-50 (manufactured by SHIMAZU Corporation)
Atmosphere: nitrogen
Temperature: raised from 25°C to 150°C at 5°C/min
Load: 10 g, indented with a 0.5-mmφ jig

TMA is a technique in which the deformation of a substance under non-oscillatory load, such as compression, tension, or bending, is measured as a function of temperature or time while changing the temperature of a sample in accordance with a specific program. The softening point is the value measured using the TMA device while applying compression load to a sample of the resin. As the temperature rises, the sample starts to be softened, and a probe penetrates the sample and is displaced downward. The displacement start temperature was defined as the softening point (temperature).

**[Table 2]**

| | Viscosity measuring temperature (°C) | Viscosity Pa·s | Testing for water blocking between strands | Flexibility | Sagging test | Softening point (°C) |
|---|---|---|---|---|---|---|
| Example | 150 | 9.4 | Good | Good | Sagging not occurred | 65 |
| | 125 | 338.2 | | | | |
| Comparative Example 1 | 150 | 0.7 | Good | Poor | Sagging occurred | 62 |
| | 125 | 5.5 | | | | |
| Comparative Example 2 | 150 | 3.4 | Good | Good | Sagging occurred | 62 |
| | 125 | 17.6 | | | | |
| Comparative Example 3 | 150 | 18.1 | Poor | Good | Sagging occurred | 61 |
| | 125 | 25.7 | | | | |
| Comparative Example 4 | 150 | 47.5 | Poor | Good | Sagging not occurred | 68 |
| | 125 | 224.5 | | | | |
| Comparative Example 5 | 150 | 25.3 | Poor | Good | Sagging occurred | 52 |
| | 125 | 48.5 | | | | |

In Example which is a highly flowable polyamide resin according to the second embodiment, the viscosity at a shear rate of 1 s⁻¹ at 150°C is 10 Pa·s s or less, and the viscosity at a shear rate of 1 s⁻¹ at 125°C is more than 200 Pa·s. Consequently, as shown in Table 2, excellent water blocking ability between strands is obtained, and sagging is not observed in the sagging test. These results indicate that excellent water blocking ability between strands is obtained when used to waterproof a wire harness. Furthermore, the highly flowable polyamide resin in Example has excellent flexibility, which indicates that cracks due to vibration and deformation during use are unlikely to occur when used to waterproof a wire harness.

In Comparative Examples 1, 2, and 4 in which the mass ratio of the acid component (a) to the acid component (b) is 100/0 and the acid component (b) is not included, the difference in shear viscosity between at 150°C and 125°C is smaller than that in Example. Consequently, in Comparative Examples 1 and 2, the viscosity at a shear rate of 1 s⁻¹ at 125°C is less than 200 Pa·s, and sagging occurs in the sagging test. In Comparative Example 1 in which the diamine is partially replaced with a triamine, flexibility is also poor. Furthermore, in Comparative Example 4, the viscosity at a shear rate of 1 s⁻¹ at 125°C is more than 200 Pa·s, and sagging is not observed in the sagging test; however, the viscosity at a shear rate of 1 s⁻¹ at 150°C is 48 Pa·s which far exceeds 10 Pa·s. Consequently, the water blocking ability between strands is poor.

In Comparative Example 3 in which the compositional ratio of the acid component (b) to the total of the acid component (a) and the acid component (b) is less than 50% by mass, the difference in shear viscosity between at 150°C and 125°C is smaller than that in Example, the viscosity at a shear rate of 1 s⁻¹ at 150°C is more than 10 Pa·s, and the viscosity at a shear rate of 1 s⁻¹ at 125°C is less than 200 Pa·s. Consequently, the water blocking ability between strands is poor, and sagging occurs in the sagging test.

Furthermore, in Comparative Example 5 in which EVA is used instead of a polyamide resin, the water blocking ability between strands is poor. The reason for this is believed to be that the viscosity at 150°C is high. Furthermore, since the viscosity at 125°C is low, sagging occurs.

In Comparative Examples 1, 2, 3, and 5 in which the softening point by TMA is lower than 63°C, sagging occurs. On the other hand, in Example and Comparative Example 4 in which the softening point by TMA is 63°C or higher, sagging does not occur. These results indicate that the softening point by TMA measured by the method under the conditions described above is preferably 63°C or higher.

## Claims

1. A highly flowable polyamide resin which has a viscosity of 10 Pa·s or less at a shear rate of 1 s⁻¹ at 150°C and a viscosity of 100 Pa·s or more at a shear rate of 1 s⁻¹ at 125°C.

2. A highly flowable polyamide resin which is a copolyamide resin comprising an acid component (a) containing, as a main component, a polymerized fatty acid which contains a dimerized fatty acid (dimer acid) having 16 to 48 carbon atoms and in which the content of the dimerized fatty acid is 30% by mass or more, an acid component (b) containing, as a main component, a dibasic acid selected from the group consisting of aliphatic dicarboxylic acids having 6 to 22 carbon atoms, aromatic dicarboxylic acids having 8 to 22 carbon atoms, and ester derivatives of the dicarboxylic acids, and an amine component (c) containing a diamine as a main component, the acid component (a), the acid component (b), and the amine component (c) being linked by amide bonds, in which the mass ratio of the acid component (a) to the acid component (b) is in a range of 98/2 to 50/50; and which has a viscosity of 10 Pa·s or less at a shear rate of 1 s⁻¹ at 150°C.
